# EUROPEAN PATENT APPLICATION

(11) **EP 3 203 730 A1**
(43) Date of publication of application: **09.08.2017**
(21) Application number: 15847929.5
(22) Date of filing: 08.05.2015
(51) Int. Cl.: H04N 7/15

(54) **METHOD AND APPARATUS FOR CONFIGURING ENDPOINT CAPABILITY SET**

(30) Priority: 29.09.2014 CN 201410515764
(71) Applicant: ZTE Corporation, Shenzhen, Guangdong 518057 (CN)
(72) Inventor: WANG, Liang, Shenzhen Guangdong 518057 (CN); YE, Xiaoyang, Shenzhen Guangdong 518057 (CN)
(74) Representative: Novagraaf Technologies
(86) International application number: PCT/CN2015/078618
(87) International publication number: WO 2016/050071

(57) **Abstract**

Provided are a method and apparatus for configuring a terminal capability set. In the above-mentioned method, a ControLling mUltiple streams for tElepresence (CLUE) encoding parameter is configured in a terminal capability set, and the terminal capability set is transmitted. According to the technical solution provided in the technical solution, new demands of a telepresence system can be met, and a telepresence product can be supported.

## Description

### Technical Field

The present disclosure relates to the field of communications, and in particular to a method and apparatus for configuring a terminal capability set.

### Background

At present, in an H.323-based video conference system, three types of capability sets are defined in a terminal capability set message of H.245, the three types of capability sets being a receive capability set, a transmit capability set, and a receive and transmit capability set respectively. Meanwhile, it is also specified that if a terminal only carries a transmit capability set, the terminal is only able to transmit media streams without receiving media streams. With the further development of a video conference, a telepresence system emerges, in which the control of multiple media streams of the same type is able to be supported on the basis of the support of a single media stream of the same type by the video conference. As a result, one or more ControLling mUltiple streams for tElepresence (CLUE) encoding parameters need to be interacted between telepresence terminals. The CLUE encoding parameter is encoding capabilities capable of being transmitted by the telepresence terminals. If the CLUE encoding parameter is carried by only using a transmit capability set of an existing definition, the telepresence terminals are terminals having only a transmit capability without a receive capability according to the existing definition, which is inconsistent with an actual situation that the telepresence terminals are terminals having both the transmit capability and the receive capability.

Therefore, the problem on how to carry a CLUE encoding parameter in a telepresence terminal on the basis of an existing protocol exists in the related art.

### Summary

Embodiments of the present disclosure provide a method and apparatus for configuring a terminal capability set, which can at least solve the problem in the related art that a CLUE encoding parameter cannot be carried in a telepresence terminal on the basis of an existing protocol.

According to an embodiment of the present disclosure, a method for configuring a terminal capability set is provided.

The method for configuring a terminal capability set according to the embodiment of the present disclosure may include that: a CLUE encoding parameter is configured in a terminal capability set; and the terminal capability set is transmitted.

In the present embodiment, the step that the CLUE encoding parameter is configured in the terminal capability set may include one of the following steps: a structural body is added into the terminal capability set, wherein the structural body is configured to carry the CLUE encoding parameter; the CLUE encoding parameter is directly carried in the terminal capability set.

In the present embodiment, the step that the structural body is added into the terminal capability set may include one of the following steps: the structural body is added on the basis of an existing structure of the terminal capability set, wherein the structural body is configured to carry the CLUE encoding parameter; the structural body is added into a capability of the existing structure of the terminal capability set, wherein the structural body is configured to carry the CLUE encoding parameter; the structural body is added into generic information of the existing structure of the terminal capability set, wherein the structural body is configured to carry the CLUE encoding parameter.

In the present embodiment, the step that the CLUE encoding parameter is directly carried in the terminal capability set may include one of the following steps: the CLUE encoding parameter is carried by using a transmit capability, and meanwhile, one or more parameters other than the CLUE encoding parameter are carried by using a receive capability; the CLUE encoding parameter is carried by using a receive and transmit capability.

In the present embodiment, the CLUE encoding parameter may include at least one of: a maximum bandwidth, a maximum picture size, and a quantity of pixels maximally processed per second.

According to another embodiment of the present disclosure, an apparatus for configuring a terminal capability set is provided.

The apparatus for configuring a terminal capability set according to the embodiment of the present disclosure may include: a configuration module, arranged to configure CLUE encoding parameter in a terminal capability set; and a transmission module, arranged to transmit the terminal capability set.

In the present embodiment, the configuration module may include: a first configuration unit, arranged to add a structural body into the terminal capability set, wherein the structural body is configured to carry the CLUE encoding parameter; and a second configuration unit, arranged to directly carry the CLUE encoding parameter in the terminal capability set.

In the present embodiment, the first configuration unit may be arranged to add the structural body into the terminal capability set in one of the following manners: adding the structural body on the basis of an existing structure of the terminal capability set, wherein the structural body is configured to carry the CLUE encoding parameter; adding the structural body into a capability of the existing structure of the terminal capability set, wherein the structural body is configured to carry the CLUE encoding parameter; and adding the structural body into generic information of the existing structure of the terminal capability set, wherein the structural body is configured to carry the CLUE encoding parameter.

In the present embodiment, the second configuration unit may be arranged to directly carry the CLUE encoding parameter in the terminal capability set in one of the following manners: carrying the CLUE encoding parameter by using a transmit capability, and meanwhile, carrying one or more parameters other than the CLUE encoding parameter by using a receive capability; and carrying the CLUE encoding parameter by using a receive and transmit capability.

In the present embodiment, the CLUE encoding parameter may include at least one of: a maximum bandwidth, a maximum picture size, and a quantity of pixels maximally processed per second.

By means of the embodiments of the present disclosure, a CLUE encoding parameter is configured in a terminal capability set; and the terminal capability set is transmitted. The problem in the related art that a CLUE encoding parameter cannot be carried in a telepresence terminal on the basis of an existing protocol is solved, thereby meeting new demands of a telepresence system, and supporting a telepresence product.

### Brief Description of the Drawings

The accompanying drawings described herein are intended to provide further understanding of the present disclosure, and form a part of the present application. The schematic embodiments and descriptions of the present disclosure are intended to explain the present disclosure, and do not form improper limits to the present disclosure. In the accompanying drawings:
Fig. 1 is a flowchart of a method for configuring a terminal capability set according to an embodiment of the present disclosure;
Fig. 2 is a structure block diagram of an apparatus for configuring a terminal capability set according to an embodiment of the present disclosure; and
Fig. 3 is a structure block diagram of an apparatus for configuring a terminal capability set according to an exemplary embodiment of the present disclosure.

### Detailed Description of the Embodiments

The present disclosure will be described below with reference to the accompanying drawings and in conjunction with the embodiments in detail. It is important to note that the embodiments in the present application and the features in the embodiments may be combined under the condition of no conflicts.

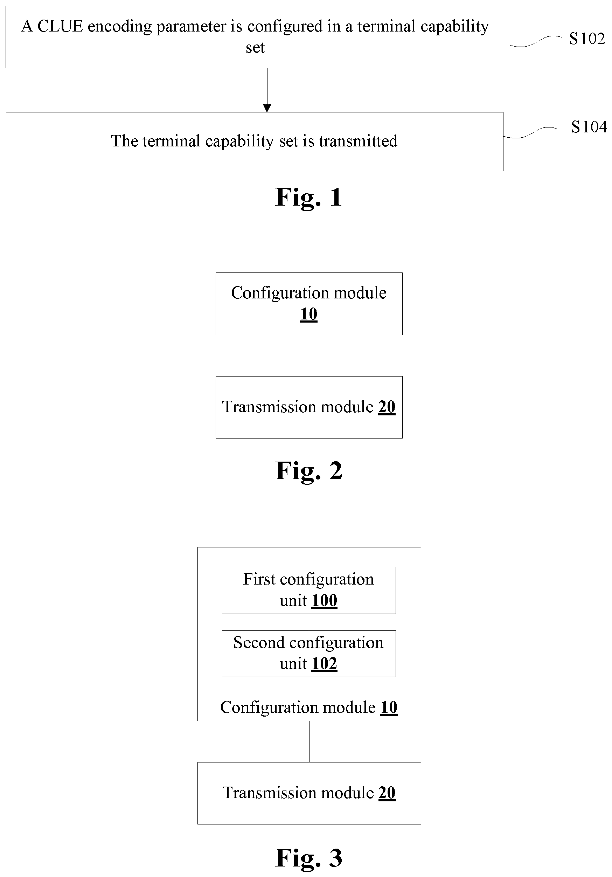

Fig. 1 is a flowchart of a method for configuring a terminal capability set according to an embodiment of the present disclosure. As shown in Fig. 1, the method may include the following processing steps.

Step S102: A CLUE encoding parameter is configured in a terminal capability set.

Step S104: The terminal capability set is transmitted.

In the related art, a CLUE encoding parameter cannot be carried in a telepresence terminal on the basis of an existing protocol. By means of the method as shown in Fig. 1, a telepresence terminal carries a CLUE encoding parameter in a terminal capability set message, so terminals in a telepresence system can learn of CLUE encoding related parameters of other terminals. By virtue of the technical solution, requirements for carrying a CLUE encoding related parameter by a telepresence terminal based on an H.323 system are met, thereby meeting new demands of the telepresence system, and supporting a telepresence product.

In an exemplary implementation process, the above-mentioned CLUE encoding parameter may include, but are not limited to, at least one of:
(1) a maximum bandwidth;
(2) a maximum picture size; and
(3) a quantity of pixels maximally processed per second.

In the present embodiment, in Step S102, the CLUE encoding parameter may be configured in the terminal capability set in one of the following modes.
Mode 1: A structural body is added into the terminal capability set, wherein the structural body is configured to carry the CLUE encoding parameter.
Mode 2: The CLUE encoding parameter is directly carried in the terminal capability set.

In the present embodiment, the above-mentioned mode 1 that the structural body is added into the terminal capability set may be embodied as any of the following configuration modes.

Configuration mode 1: the structural body is added on the basis of an existing structure of the terminal capability set, wherein the structural body is configured to carry the CLUE encoding parameter.

Configuration mode 2: the structural body is added into a capability of the existing structure of the terminal capability set, wherein the structural body is configured to carry the CLUE encoding parameter.

Configuration mode 3: the structural body is added into generic information of the existing structure of the terminal capability set, wherein the structural body is configured to carry the CLUE encoding parameter.

In an exemplary embodiment, on the basis of an existing H.245 definition, the CLUE encoding parameter may be carried in the terminal capability set. Specifically, the following modes of adding the structural body may be adopted.
(1) A structural body carrying a CLUE encoding related parameter may be added into the terminal capability set.
   In an exemplary embodiment, another structural body parallel to the existing structural bodies may be added into the terminal capability set, and is configured to carry the CLUE encoding related parameter. For example, the newly added structural body may be embodied as follows.

   ```
   TerminalCapabilitySet
   {
   sequenceNumber,
       protocolIdentifier,
       multiplexCapability,
       capabilityTable,
       capabilityDescriptors,
       CLUE encoding related structure,
       ...,
       genericInformation,
   }
   CLUE encoding related structure
   {
        maximum bandwidth,
        maximum picture size,
        quantity of pixels maximally processed per second,
   }
```
(2) The structural body carrying the CLUE encoding related parameter may be added into a capability of the terminal capability set.
   In an exemplary embodiment, the structural body may be added into the capability of the terminal capability set, and is configured to carry the CLUE encoding related parameter. For example, the addition of the structural body into the capability of the terminal capability set may be embodied as follows.

   ```
   Capability ::=CHOICE
   {
       nonstandard,
       receiveVideoCapability,
       transmitVideoCapability,
       receiveAndTransmitVideoCapability,
       receiveAudio Capability,
       transmitAudioCapability,
       receiveAndTransmitAudioCapability,
       receiveDataApplicationCapability,
       transmitDataApplicationCapability,
       receiveAndTransmitDataApplicationCapability,
   CLUE encoding related structure,
   }
   CLUE encoding related structure
   {
        maximum bandwidth,
        maximum picture size,
        quantity of pixels maximally processed per second,
   }
```
(3) The structural body carrying the CLUE encoding related parameter may be added into generic information of the terminal capability set.

In an exemplary embodiment, the structural body configured to carry the CLUE encoding related parameter may be added into the generic information of the terminal capability set.

```
   genericInformation
   {
   CLUE encoding related structure,
   }
   CLUE encoding related structure
   {
        maximum bandwidth,
        maximum picture size,
        quantity of pixels maximally processed per second,
   }
```

In the present embodiment, the above-mentioned mode 2 that the CLUE encoding parameter is directly carried in the terminal capability set may be embodied as any of the following configuration modes.

Configuration mode 1: the CLUE encoding parameter is carried by using a transmit capability, and meanwhile, one or more parameters other than the CLUE encoding parameter are carried by using a receive capability.

Configuration mode 2: the CLUE encoding parameter is carried by using a receive and transmit capability.

In an exemplary embodiment, the following two modes may be included specifically by using the existing capability definition of H.245.
(1) A transmit capability is adopted to carry the CLUE encoding related parameter, and meanwhile, a receive capability is utilized to carry one or more parameters, unrelated to CLUE encoding, of the telepresence terminal.
   In an exemplary embodiment, the transmit capability may be adopted to carry the CLUE encoding parameter, and meanwhile, the receive capability is utilized to carry one or more parameters, unrelated to CLUE encoding, of the telepresence terminal.

   ```
   TerminalCapabilitySet
   {
       receive..Capability
       {
       CLUE unrelated encoding parameter;
       }
       transmit..Capability
       {
       CLUE encoding related parameter;
       }
   }
```

   In the terminal capability set, the receive capability is arranged to carry at least one encoding parameter unrelated to CLUE, and video and audio encoding parameters are stored in receiveVideoCapability and receiveAudioCapability respectively. The transmit capability is arranged to carry a CLUE encoding related parameter, and video and audio encoding parameters are stored in transmitVideoCapability and transmitAudioCapability respectively. CLUE non-relation and CLUE relation are distinguished by using encoding identifiers (ID).
(2) A receive and transmit capability is adopted to carry the CLUE encoding related parameter.

In an exemplary embodiment, the receive and transmit capability may be adopted to carry the CLUE encoding related parameter.

```
   TerminalCapabilitySet
   {
       receiveAndTransmit..Capability
       {
       CLUE encoding related parameter;
       }
   }
```

In the terminal capability set, the receive and transmit capability is arranged to carry a encoding parameter related to CLUE, and video and audio encoding parameters are stored by using receiveAndTransmitVideoCapability and receiveAndTransmitAudioCapability respectively. Since the receive and transmit capability is a symmetric capability, that is, if a terminal adopts this capability, a receive capability of the terminal is equal to a transmit capability of the terminal, that is, a decoding capability of the terminal is equal to an encoding capability of the terminal.

Fig. 2 is a structure block diagram of an apparatus for configuring a terminal capability set according to an embodiment of the present disclosure. As shown in Fig. 2, the apparatus for configuring a terminal capability set may include: a configuration module 10, arranged to configure a CLUE encoding parameter in a terminal capability set; and a transmission module 20, arranged to transmit the terminal capability set.

By means of the apparatus as shown in Fig. 2, the problem in the related art that a CLUE encoding parameter cannot be carried in a telepresence terminal on the basis of an existing protocol is solved, thereby meeting new demands of a telepresence system, and supporting a telepresence product.

In an exemplary implementation process, the above-mentioned CLUE encoding parameter may include, but are not limited to, at least one of:
(1) a maximum bandwidth;
(2) a maximum picture size; and
(3) a quantity of pixels maximally processed per second.

In the present embodiment, as shown in Fig. 3, the configuration module 10 may include: a first configuration unit 100, arranged to add a structural body into the terminal capability set, wherein the structural body is configured to carry the CLUE encoding parameter; and a second configuration unit 102, arranged to directly carry the CLUE encoding parameter in the terminal capability set.

In the present embodiment, the first configuration unit 100 is arranged to add the structural body into the terminal capability set in one of the following manners: adding the structural body on the basis of an existing structure of the terminal capability set, wherein the structural body is configured to carry the CLUE encoding parameter; adding the structural body into a capability of the existing structure of the terminal capability set, wherein the structural body is configured to carry the CLUE encoding parameter; and adding the structural body into generic information of the existing structure of the terminal capability set, wherein the structural body is configured to carry the CLUE encoding parameter.

In the present embodiment, the second configuration unit 102 is arranged to directly carry the CLUE encoding parameter in the terminal capability set in one of the following manners: carrying the CLUE encoding parameter by using a transmit capability, and meanwhile, carrying one or more parameters other than the CLUE encoding parameter by using a receive capability; and carrying the CLUE encoding parameter by using a receive and transmit capability.

From the above descriptions, it may be seen that the above-mentioned embodiments achieve the following technical effects (it is important to note that these effects may be achievable effects of some exemplary embodiments). The telepresence terminal carries the CLUE encoding related parameter in a terminal capability set message, so terminals in a telepresence system can learn of the CLUE encoding related parameters of other terminals. By virtue of the technical solution, requirements for carrying a CLUE encoding related parameter by a telepresence terminal based on an H.323 system are met, thereby meeting new demands of the telepresence system, and supporting a telepresence product.

Obviously, those skilled in the art should understand that all modules or all steps in the present disclosure may be implemented by using a general calculation apparatus, may be centralized on a single calculation apparatus or may be distributed on a network composed of a plurality of calculation apparatuses. Optionally, they may be implemented by using executable program codes of the calculation apparatuses. Thus, they may be stored in a storage apparatus and executed by the calculation apparatuses, the shown or described steps may be executed in a sequence different from the sequence under certain conditions, or they are manufactured into each integrated circuit module respectively, or a plurality of modules or steps therein is manufactured into a single integrated circuit module. Thus, the present disclosure is not limited to combination of any specific hardware and software.

The above is only the preferred embodiments of the present disclosure, and not intended to limit the present disclosure. There may be various modifications and variations in the present disclosure for those skilled in the art. Any modifications, equivalent replacements, improvements and the like within the principle of the present disclosure shall fall within the scope of protection defined by the appended claims of the present disclosure.

### Industrial Applicability

On the basis of the above-mentioned technical solution provided in the embodiments of the present disclosure, a CLUE encoding parameter is configured in a terminal capability set; and the terminal capability set is transmitted. The problem in the related art that a CLUE encoding parameter cannot be carried in a telepresence terminal on the basis of an existing protocol is solved, thereby meeting new demands of a telepresence system, and supporting a telepresence product.

## Claims

1. A method for configuring a terminal capability set, comprising:
configuring a ControLling mUltiple streams for tElepresence, CLUE, encoding parameter in a terminal capability set; and
transmitting the terminal capability set.

2. The method as claimed in claim 1, wherein configuring the CLUE encoding parameter in the terminal capability set comprises one of:
adding a structural body into the terminal capability set, the structural body being configured to carry the CLUE encoding parameter; and
directly carrying the CLUE encoding parameter in the terminal capability set.

3. The method as claimed in claim 2, wherein adding the structural body into the terminal capability set comprises one of:
adding the structural body on the basis of an existing structure of the terminal capability set, the structural body being configured to carry the CLUE encoding parameter;
adding the structural body into a capability of the existing structure of the terminal capability set, the structural body being configured to carry the CLUE encoding parameter; and
adding the structural body into generic information of the existing structure of the terminal capability set, the structural body being configured to carry the CLUE encoding parameter.

4. The method as claimed in claim 2, wherein directly carrying the CLUE encoding parameter in the terminal capability set comprises one of:
carrying the CLUE encoding parameter by using a transmit capability, and meanwhile, carrying one or more parameters other than the CLUE encoding parameter by using a receive capability; and
carrying the CLUE encoding parameter by using a receive and transmit capability.

5. The method as claimed in any one of claims 1 to 4, wherein the CLUE encoding parameter comprises at least one of:
a maximum bandwidth, a maximum picture size, and a quantity of pixels maximally processed per second.

6. An apparatus for configuring a terminal capability set, comprising:
a configuration module, arranged to configure a ControLling mUltiple streams for tElepresence, CLUE, encoding parameter in a terminal capability set; and
a transmission module, arranged to transmit the terminal capability set.

7. The apparatus as claimed in claim 6, wherein the configuration module comprises:
a first configuration unit, arranged to add a structural body into the terminal capability set, the structural body being configured to carry the CLUE encoding parameter; and
a second configuration unit, arranged to directly carry the CLUE encoding parameter in the terminal capability set.

8. The apparatus as claimed in claim 7, wherein the first configuration unit is arranged to add the structural body into the terminal capability set in one of the following manners:
adding the structural body on the basis of an existing structure of the terminal capability set, the structural body being configured to carry the CLUE encoding parameter;
adding the structural body into a capability of the existing structure of the terminal capability set, the structural body being configured to carry the CLUE encoding parameter; and
adding the structural body into generic information of the existing structure of the terminal capability set, the structural body being configured to carry the CLUE encoding parameter.

9. The apparatus as claimed in claim 7, wherein the second configuration unit is arranged to directly carry the CLUE encoding parameter in the terminal capability set in one of the following manners:
carrying the CLUE encoding parameter by using a transmit capability, and meanwhile, carrying one or more parameters other than the CLUE encoding parameter by using a receive capability; and
carrying the CLUE encoding parameter by using a receive and transmit capability.

10. The apparatus as claimed in any one of claims 6 to 9, wherein the CLUE encoding parameter comprises at least one of:
a maximum bandwidth, a maximum picture size, and a quantity of pixels maximally processed per second.
